# EUROPÄISCHE PATENTSCHRIFT

(11) **EP 0 647 677 B1**
(45) Veröffentlichungstag und Bekanntmachung des Hinweises auf die Patenterteilung: **05.12.2001**
(21) Anmeldenummer: 94115352.0
(22) Anmeldetag: 29.09.1994
(51) Int. Cl.: C08L 45/00, C08L 51/00

(54) **Polymer-Legierung**
Polymer alloy
Alliage de polymères

(30) Priorität: 06.10.1993 DE 4333998
(43) Veröffentlichungstag der Anmeldung: 12.04.1995
(73) Patentinhaber: Ticona GmbH, 65451 Kelsterbach (DE); MITSUI PETROCHEMICAL INDUSTRIES, LTD., Tokyo (JP)
(72) Erfinder: Hatke, Wilfried, D-65719 Hofheim (DE); Osan, Frank, Dr., D-65779 Kelkheim (DE); Herrmann-Schönherr, Otto, Dr., D-64625 Bensheim (DE); Sullivan, Vincent J., Dr., Madison, NJ 07940 (US); Weller, Thomas, Dr., D-55130 Mainz (DE)

(56) Entgegenhaltungen:
- EP-A- 0 485 631
- DE-A- 4 202 108
- US-A- 4 104 325

## Beschreibung

Die vorliegende Erfindung betrifft Polymer-Legierungen aus Cycloolefincopolymeren (COC) und Kern-Schale-Partikeln. Die erfindungsgemäßen Polymer-Legierungen sind schlagzäh und zeichnen sich durch eine hohe Biegefestigkeit, Reißdehnung und verbesserte Verarbeitbarkeit aus.

Schlagzähe Polymere sind hinlänglich bekannt und für eine Vielzahl von Anwendungen geeignet (C.B. Bucknall, Toughened Plastics, Applied Science Publishers, London 1977; A.E. Platt, Rubber Modification of Plastics, Advances in Polymer Science, Seite 437).

Weiterhin ist bekannt, daß durch Legieren die Schlagzähigkeit und die Reißdehnung von Polymeren verbessert werden kann. So kann die Schlagzähigkeit von spröden Polymeren verbessert werden durch Legieren mit Polymersystemen, die ganz oder zum Teil aus Kautschuken mit niedrigen Glastemperaturen aufgebaut sind. Dies hat jedoch den Nachteil, daß die Morphologie und damit auch die mechanischen Eigenschaften empfindlich von den Verarbeitungsbedingungen abhängen (Polymer News, Vol. 16 (1991), Seiten 198-206; A.E. Platt, Rubber Modification of Plastics, Advances in Polymer Science, Seite 437; P.A. Lovell et al., Polymer, 34 (1993) Seite 61).

Um diesen Nachteil zu vermeiden, wurden Kern-Schale-Partikel zur Schlagzähmodifikation vorgeschlagen (Res. Discl. 323, Seite 925-926; P.A. Lovell et al., Polymer 34 (1993) Seite 61; M. Lu et al., Polymer, 34 (1993) Seite 1874; C.B. Bucknell, Rubber-modified Plastics, Comprehensive Polymer Science, Pergamon Press (1989), Seite 27-49). Diese werden als Schlagzähmodifikatoren für z.B. PVC oder PMMA verwendet (Gächter/Müller Kunststoff-Additive XXIX; Carl Hanser, München, 1983 und C.B. Bucknall, Rubber-modified Plastics, Comprehensive Polymer Science, Pergamon Press (1989), Seite 27-49). Da sich die mechanischen Eigenschaften von schlagzäh modifizierten Polymeren jedoch nicht additiv aus den Eigenschaften der Einzelkomponenten vorhersagen lassen (D.R. Paul et al. in Encyclopedia of Polymer Science, Vol.12, 1984), ist die Schlagzähmodifikation von Polymeren eine weitgehend empirische Aufgabe. Dies bedeutet, daß Kern-Schale-Partikel für jedes schlagzäh zu modifizierende Polymer und jede Anwendung in aufwendigen Optimierungstests speziell maßgeschneidert werden müssen (J. Oshiima, Seni Gakkaishi, 48(5) (1992) Seite 274; M.Lu et al., Polymer, 34 (1993) Seite 1874). Entsprechend eignen sich kommerziell erhältliche Kern-Schale Partikel jeweils nur für ganz bestimmte Polymere und Anwendungen.

Eine wesentliche Voraussetzung zur Erzielung ausreichender Schlagzähigkeiten ist eine gute Phasenanhaftung bzw. Mischbarkeit zwischen Matrixpolymer und dem kautschukhaltigen Polymer (D.R. Paul in Encyclopedia of Polymer Science Vol. 12 (1984) S.437; A.E. Platt in Comprehensive Polymer Science, Pergamon Press N.Y. (1989) S.437, C.B. Bucknall in Toughened Plastics, Applied Science Publishers, London (1977) S. 209-210; M. Lu et al., Polymer, 34 (1993) S. 1874). Wie alle Polyolefine sind auch COC (EP 203 799, EP 283 164, EP 407 870, EP 485 893, EP 503 422, DD 222 317, DD 231 070, DD 246 903, EP 156 464) mit anderen Polymeren schlecht mischbar und weisen somit eine schlechte Phasenanhaftung an andere Polymere auf. Die Verträglichkeit und damit die Phasenanhaftung kann nach D.W. van Krevelen (Properties of Polymers Elsevier, Amsterdam-Oxford-New York, 1976, Kapitel 4) über den Löslichkeitsparameter Delta abgeschätzt werden, wobei man Werte von ca. 13,5 J^{1/2}cm^{3/2} erhält. Diese Werte liegen deutlich unterhalb von denen für typische schlagzähmodifizierbare Polymere.

Somit war es zur Schlagzähmodifizierung von COC bislang notwendig diese mit dem kautschukhaltigen Polymer zu vernetzen (JP 92-170 453, JP 92-170 454, JP 92-356 353). Eine zuverlässige und reproduzierbare Einstellung der Morphologien und Vernetzungsgrade und der damit verbundenen Schlagzähigkeit und rheologischen Eigenschaften ist mit dieser Vorgehensweise schwer zu realisieren. Insbesondere hängt die Reproduzierbarkeit der genannten Eigenschaften empfindlich von Parametern wie z.B. Verarbeitungsbedingungen, Vernetzergehalt, Temperatur und Zeit ab.

Aus der DE-A-42 02 108 sind Polymer-Legierungen aus Norbornen-Ethylen Copolymeren, Elasten und/oder weiteren Thermoplasten bekannt.

Es bestand somit die Aufgabe ein Verfahren zur Herstellung eines schlagzähen Polymeren bereitzustellen, welches die Nachteile des Standes der Technik vermeidet.

Überraschend wurde nun gefunden, daß schlagzähe Polymer-Legierungen aus COC und Kern-Schale-Partikeln hergestellt werden können, die eine gute Biegefestigkeit aufweisen. Außerdem können COC mit einer Vielzahl verschiedenartiger Kern-Schale-Partikel schlagzäh modifiziert werden, ohne daß die Partikel aufwendig für das Polymer und die jeweilige Anwendung optimiert werden müssen. Außerdem können die Polymer-Legierungen in technisch einfacher Weise verarbeitet werden.

Die vorliegende Erfindung betrifft somit ein Verfahren zur Herstellung einer Polymer-Legierung enthaltend a) eines oder mehrere Cycloolefincopolymere und b) einen oder mehrere Typen von Kern-Schale-Partikeln, dadurch gekennzeichnet, daß Komponenten a) und b) zu einem master batch gemischt werden und die resultierende Mischung mit einem oder mehreren Cycloolefin copolymeren gemischt wird. Bevorzugt enthält die erfindungsgemäß hergestellte Polymer-Legierung ein COC und einen oder mehrere Typen von Kern-Schale-Partikeln, besonders bevorzugt ein COC und einen Typ von Kern-Schale-Partikeln.

Die für die Zwecke der Erfindung geeigneten COC's weisen Glastemperaturen auf zwischen 50 und 250°C, bevorzugt zwischen 100 und 200°C, besonders bevorzugt zwischen 100 und 150°C.

Die erfindungsgemäße Polymer-Legierung enthält COC, die enthalten, 0,1 bis 99 Gew.-% an Struktureinheiten, bezogen auf die Gesamtmasse des COC, die sich ableiten von polycyclischen Olefinen, bevorzugt der Formeln I, II, III, IV, V oder VI, 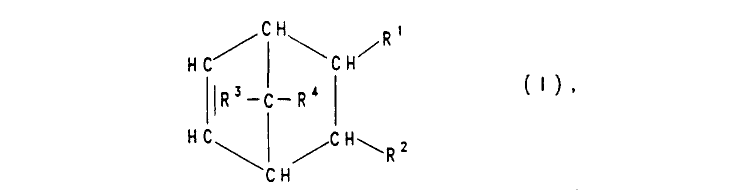 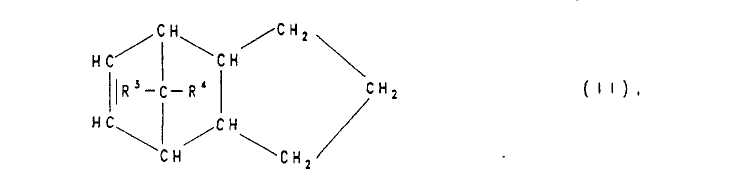 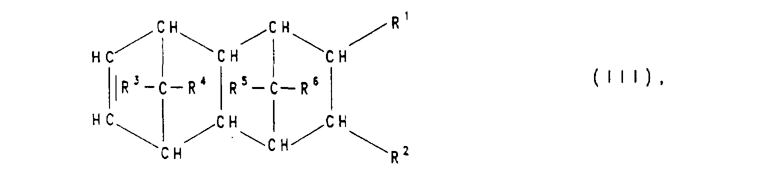 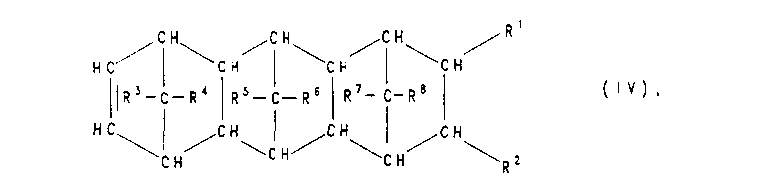 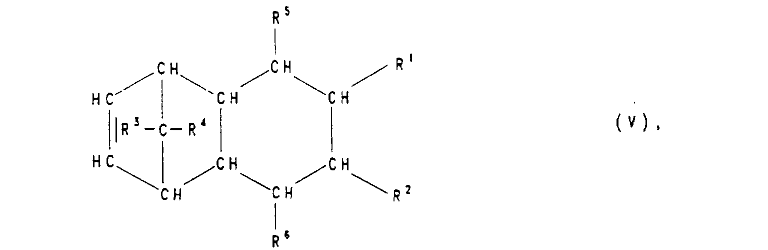 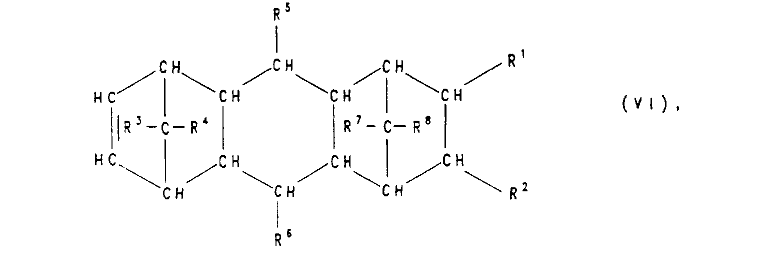 worin R¹, R², R³, R⁴, R⁵, R⁶, R⁷ und R⁸ gleich oder verschieden sind und ein Wasserstoffatom oder einen C₁-C₂₀-Kohlenwasserstoffrest wie einen linearen oder verzweigten C₁-C₈-Alkylrest, C₆-C₁₈-Arylrest, C₇-C₂₀-Alkylenarylrest, einen cyclischen oder acyclischen C₂-C₁₀-Alkenylrest bedeuten, oder zwei oder mehr Reste R¹ bis R⁸ einen Ring bilden, und die Reste R¹ bis R⁸ in den verschiedenen Formeln I bis VI eine unterschiedliche Bedeutung haben können,

0 bis 95 Gew.-% an Struktureinheiten, bezogen auf die Gesamtmasse des COC, die sich ableiten von einem oder mehreren monocyclischen Olefinen, bevorzugt der Formel VII 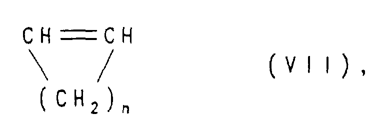 worin n eine Zahl von 2 bis 10 ist, und
0 bis 99 Gew.-%, gegebenenfalls 0,1 bis 99 Gew.-% an Struktureinheiten, bezogen auf die Gesamtmasse des COC, die sich ableiten von einem oder mehreren acyclischen Olefinen, bevorzugt der Formel VIII 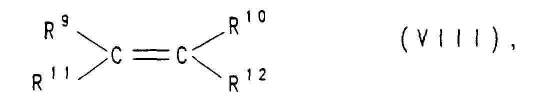 worin R⁹, R¹⁰, R¹¹ und R¹² gleich oder verschieden sind und ein Wasserstoffatom oder einen C₁-C₂₀-Kohlenwasserstoffrest, wie C₁-C₈-Alkylrest oder C₆-C₁₂-Arylrest, bedeuten.

Bevorzugt enthalten die Cycloolefincopolymere Struktureinheiten, die sich ableiten von einem oder mehreren cyclischen Olefinen, besonders bevorzugt polycyclischen Olefinen der Formeln I oder III, und einem oder mehreren acyclischen Olefinen bevorzugt der Formel VIII, insbesondere α-Olefinen mit 2 bis 20 C-Atomen. Insbesondere sind Cycloolefincopolymere bevorzugt, die Struktureinheiten enthalten, die sich ableiten von einem polycyclischen Olefin der Formel I oder III und einem acylischen Olefin der Formel VIII.

Bevorzugt sind COC, die Struktureinheiten enthalten, die sich ableiten von polycyclischen Olefinen mit Norbornengrundstruktur, besonders bevorzugt Norbornen oder Tetracyclododecen. Bevorzugt sind auch COC, die Struktureinheiten enthalten, die sich ableiten von acyclischen Olefinen mit endständigen Doppelbindungen wie α-Olefine, besonders bevorzugt Ethylen oder Propylen. Besonders bevorzugt sind Norbornen/Ethylen- und Tetracyclododecen/Ethylen-Copolymere. Der Anteil der acyclischen Olefine bevorzugt der Formel VIII, beträgt 0 bis 99 Gew.-%, bevorzugt 5 bis 80 Gew.-%, besonders bevorzugt 10 bis 60 Gew.-%, bezogen auf die Gesamtmasse des COC.

Die COC werden hergestellt bei Temperaturen von -78 bis 150°C und einem Druck von 0,01 bis 64 bar, in Gegenwart eines oder mehrerer Katalysatoren, welche eine Übergangsmetallverbindung und gegebenenfalls einen Cokatalysator enthalten. Als Übergangsmetallverbindungen eignen sich Metallocene, insbesondere stereorigide Metallocene, und Verbindungen Titan- und Vanadiumbasis. Beispiele für Katalysatorsysteme, welche für die Herstellung der für die Zwecke der Erfindung geeigneten COC geeignet sind, sind z.B. beschrieben in EP 203 799, EP 283 164, EP 407 870, EP 485 893, EP 503 422, DD 222 317, DD 231 070.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis (1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
lsopropylen-(9-fluorenyl)-cyclopentadienyl-zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
lsopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
lsopropylen-(methylcyclopentadienyl)-(1-indenyl)-zirkondichloridund analoge Hafnocene,
Titantetrachlorid, VOCl₃, VOCl₂(OCH₃), VOCl₂(OC₂H₅) und VOCl(OC₂H₅)₂.

Bevorzugt sind dabei:
rac-Dimethylsilyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
rac-Diphenylsilyl-bis-(1-indenyl)-zirkondichlorid,
rac-Ethylen-1,2-bis-(1-indenyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
lsopropylen-(methylcyclopentadienyl)-(1-indenyl)-zirkondichlorid.

Die für die Zwecke der Erfindung geeigneten COC's weisen Glastemperaturen auf zwischen 50 und 250°C, bevorzugt zwischen 100 und 200°C, besonders bevorzugt zwischen 100 und 150°C.

Die für die Zwecke der Erfindung geeigneten COC weisen Viskositätszahlen (bestimmt in Dekalin bei 135°C) auf zwischen 25 und 200 ml/g, bevorzugt zwischen 40 und 120 ml/g, besonders bevorzugt zwischen 40 und 80 ml/g.

Die in der erfindungsgemäß hergestellten Polymer-Legierung enthaltenen Kern-Schale-Partikel enthalten zwei (Kern und eine Schale) oder mehr (Kern und mehrere Schalen) sich einander abwechselnde Schichten verschiedener Polymere. Gemeinsames Merkmal dieser Partikel ist, daß die einzelnen Schichten aus Polymeren mit unterschiedlichen Glastemperaturen Tg bestehen. Polymere mit niedriger Glastemperatur werden dabei als Kautschukphase und Polymere mit hoher Glastemperatur als Hartphase bezeichnet. Die Herstellung solcher Partikel kann z.B. durch Emulsionspolymerisation erfolgen. Eine oder mehrere Schichten können während der Herstellung chemisch vernetzt werden, damit sich Form und Größe des Kern-Schale-Partikels beim anschließenden Legieren mit COC nicht verändern.

Als unvernetzte Grundmaterialien für die vernetzten Kautschukphasen kommen Polymersysteme in Frage, deren Glastemperaturen unterhalb von 0°C, bevorzugt unterhalb von -20°C und besonders bevorzugt unterhalb von -40°C liegen. Geeignet sind prinzipiell alle Polymere, die solche Glastemperaturen aufweisen und die zur Synthese von Kern-Schale-Partikeln geeignet sind.

Kern-Schale-Partikel, deren Kautschukphasen besonders niedrige Glastemperaturen Tg aufweisen sind besonders geeignet zur Herstellung von Polymer-Legierungen, die für Anwendungen bei tiefen Temperaturen eingesetzt werden.

Die Glastemperaturen der Kautschukphasen lassen sich häufig nicht für sich alleine messen, können aber dadurch ermittelt werden, daß man ein Emulsionspolymerisat der betreffenden Monomerenzusammensetzung herstellt, isoliert, und die Glastemperatur bestimmt. Eine weitere Methode zur Bestimung der Glastemperaturen der Kautschukphasen besteht in der Messung von dynamisch mechanischen Eigenschaften der erfindungsgemäßen Polymer-Legierungen und denen der Matrixpolymeren alleine. Maxima der Verlustfaktorkurven können als Maß für die Glastemperaturen angesehen werden.

Die für die Zwecke der Erfindung geeigneten Kern-Schale-Partikel enthalten Kautschukphasen in Volumen-%, bezogen auf das Gesamtvolumen der Partikel, zwischen 10 und 90, bevorzugt zwischen 20 und 70 und besonders bevorzugt zwischen 30 und 60.

Die für die Zwecke der Erfindung geeigneten Kern-Schale-Partikel enthalten Hartphasen in Volumen-%, bezogen auf das Gesamtvolumen der Partikel, zwischen 90 und 10, bevorzugt zwischen 80 und 30 und besonders bevorzugt zwischen 70 und 40.

Die Herstellung von Kern-Schale-Partikeln ist gut bekannt und zum Beispiel ausführlich beschrieben in US 3,833,682, US 3,787,522, DE 2 116 653, DE 22 53 689, DE 41 32 497, DE 41 31 738, DE 40 40 986, US 3,251,904, DE 33 00 526.

Als Kautschukphase der Kern-Schale-Partikel können Homo- oder Copolymere, bestehend aus zwei oder mehr Monomerentypen verwendet werden. Gemeinsames Merkmal dieser Homo- und Copolymere ist eine Glastemperatur unterhalb von 0°C.

Dabei können sich die Homo- und Copolymere von folgenden Monomeren ableiten:

Konjugierte Dien-Monomere wie Butadien, Isopren, Chloropren, monoethylenische ungesättigte Monomere wie Alkyl- und Arylacrylate, wobei die Alkylreste linear, cyclisch oder verzweigt sein können und die Arylreste wiederum selbst substituiert sein können,

Alkyl- und Arylmethacrylate, wobei die Alkylreste linear, cyclisch oder verzweigt sein können und die Arylreste wiederum selbst substitutiert sein können,

Substituierte Alkyl- und Arylmethacrylate und Acrylate, wobei die Substituenten lineare, cyclische oder verzweigte Alkylreste oder substituierte Arylreste sein können,

Acrylnitrile und substituierte Acrylnitrile (z.B. Methacrylnitril, alpha-Methylenglutarnitril, alpha-Ethylacrylnitril, alpha-Phenylacrylnitril), Alkyl- und Arylacrylamide und substituierte Alkyl- und Arylacrylamide,
Vinylester und substituierte Vinylester,
Vinylether und substituierte Vinylether,
Vinylamide und substituierte Vinylamide,
Vinylketone und substituierte Vinylketone,
Vinylhalogenide und substituierte Vinylhalogenide,
Olefine, mit einer oder mehr ungesättigten Doppelbindungen, wie sie z.B. zur Herstellung von olefinischen Kautschuken Verwendung finden, insbesondere Ethylen, Propylen, Butylen und 1,4-Hexadien sowie
vinylaromatische Verbindungen wie Styrol, alpha-Methylstyrol, Vinyltoluol, Halogenstyrole und t-Butylstyrol.

Kautschukphasen auf der Basis von Organopolysiloxanen der nachfolgenden allgemeinen Formel können ebenso für den Aufbau von Kern-Schale-Partikeln verwendet werden, 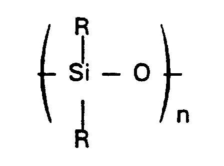 , wobei R gleiche oder verschiedene Alkyl- oder Alkenylreste mit 1 bis 10 C-Atomen, Arylreste oder substitutierte Kohlenwasserstoffreste bedeutet. Dabei können die Alkylreste und Alkenylreste linear, verzweigt oder cyclisch sein.

Weiterhin können Kautschukphasen auf der Basis von fluorierten monoethylenisch ungesättigten Verbindungen wie Tetrafluoroethylen, Vinylidenfluorid, Hexafluoropropen, Chlortrifluorethylen und Perfluoro(alkylvinylethern) verwendet werden.

Die Kautschukphasen können auch vernetzt sein, wozu sich polyfunktionelle ungesättigte Verbindungen wie sie zum Beispiel in DE 2 116 653, US 3,787,522 und EP 0 436 080 beschrieben sind verwenden lassen. Ebenso in diesen Schriften beschrieben ist die Verwendung von Aufpfropfmonomeren. Diese Verbindungen werden eingesetzt um eine mögliche weitere Schale chemisch an die darunter liegende Phase anzubinden falls dies erwünscht ist.

Zur Erzielung von Polymer-Legierungen mit guter Schlagzähigkeit auch bei tiefen Temperaturen werden Kern-Schale-Partikel bevorzugt, deren Kautschukphasen auf Butadien basieren.

Zur Erzielung von Polymer-Legierungen mit guter Witterungsstabilität werden Kern-Schale-Partikel bevorzugt, deren Kautschukphasen auf Acrylsäureestern basieren.

Kern-Schale-Partikel, deren Kautschukphasen auf Organosiloxanen beruhen, werden bevorzugt, wenn die Polymer-Legierungen gute Schlagzähigkeit bei tiefen Temperaturen, gute Witterungsstabilität und gute Stabilität bei der Herstellung und Verarbeitung aus der Schmelze miteinander vereinen sollen.

Für die Hartphasen der erfindungsgemäßen Kern-Schale-Partikel können Homo- und Copolymere verwendet werden. Die Copolymere können dabei aus zwei oder mehr Monomeren aufgebaut sein. Gemeinsames Merkmal der entsprechenden Homo- und Copolymere ist eine Glasstufe oberhalb von 50°C. Dabei können sich die Homo- und Copolymere von folgenden Monomeren ableiten:
Monoethylenisch ungesättigte Verbindungen, wie
Alkyl- und Arylacrylate, wobei die Alkylreste linear, cyclisch oder verzweigt sein können und die Arylreste wiederum selbst substituiert sein können,
Alkyl- und Arylmethacrylate, wobei die Alkylreste linear, cyclisch oder verzweigt sein können und die Arylreste wiederum selbst substituiert sein können,
substituierte Alkyl- und Arylmethacrylate und Acrylate, wobei die Substituenten lineare, cyclische oder verzweigte Alkylreste oder substituierte Arylreste sein können,
Acrylnitrile und substituierte Acrylnitrile (z.B. Methacrylnitril, alpha-Methylenglutarnitril, alpha-Ethylacrylnitril, alpha-Phenylacrylnitril etc.),
   Alkyl- und Arylacrylamide,
   Vinylester und substituierte Vinylester,
   Vinylether und substituierte Vinylether,
   Vinylamide und substitutierte Vinylamide,
   Vinylketone und substituierte Vinylketone,
   Vinylhalogenide und substituierte Vinylhalogenide,
   Olefine (z.B. Ethylen, Propylen, Butylen), cyclische Olefine (z.B. Norbornen, Tetracyclododecen, 2-Vinylnorbornen).
   fluorierte monoethylenisch ungesättigte Verbindungen wie Tetrafluoroethylen, Vinylidenfluorid, Hexafluoropropen, Chlortrifluorethylen und
   Perfluoro(alkylvinylether) sowie vinylaromatische Verbindungen der allgemeinen Formel: 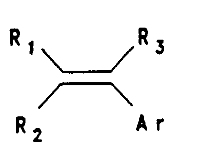 , wobei R₁, R₂, R₃ Wasserstoff, lineare, verzweigte oder cyclische Alkylreste, substituierte bzw. unsubstituierte Arylreste sind, die gleich oder verschieden sein können und Ar einen aromatischen C₆-C₁₈-Rest bedeutet, der zusätzlich noch Substituenten wie Alkyl-, oder Halogenreste tragen kann.

Die Hartphasen können vernetzt sein, wozu sich polyfunktionelle ungesättigte Verbindungen wie sie zum Beispiel in DE 2 116 653, US 3,787,522 und EP 0436 080 beschrieben sind eignen. Ebenso in diesen Schriften beschrieben ist die Verwendung von Aufpfropfmonomeren. Diese Verbindungen werden eingesetzt, um eine mögliche weitere Schale chemisch an die darunter liegende Schale anzubinden, falls dies erwünscht ist.

Als unvernetzte Grundmaterialien für die Hartphasen kommen alle Polymere in Frage mit Glastemperaturen oberhalb von 50°C, bevorzugt oberhalb von 80°C und besonders bevorzugt oberhalb von 100°C.

Die erfindungsgemaß hergestellte Polymer-Legierung kann auch kommerziell erhältliche Kern-Schale-Partikel enthalten, beispielsweise
Staphyloid - Typen der TAKEDA Chem. Industries wie z.B. die in JP 17514 oder JP 129266 beschriebenen,
Kane-Ace-Typen der KANEKA, die z.B. beschrieben sind in der Produktbroschüre Kane ACE-B,
Metablen C, Metablen W und Metablen E - Typen der METABLEN Company BV, die beschrieben sind in der Produktbroschüre Metablen,
Blendex - Typen der GE PLASTICS oder
Paraloid-Typen der ROHM and HAAS, die z.B. beschrieben sind in Gächter/Müller Kunststoff-Additive, Carl Hanser München (1983) Seite XXIX ff. oder der Broschüre PARALOID BTA 733, Impact Modifier for Clear Packaging (1987) von Rohm and Haas oder der Broschüre PARALOID BTA-III N2 BTA-702 BTA 715 (1989) von Rohm and Haas.

Die Polymer-Legierungen enthalten 2 bis 50 Gew.-%, bevorzugt 10 bis 40 Gew.-% und besonders bevorzugt 10 bis 25 Gew.-% Kern-Schale-Partikel, bezogen auf die Gesamtlegierung.

Für die Erzielung einer möglichst hohen Transparenz der Polymer-Legierungen sind Kern-Schale-Partikel mit mittleren Brechungsindizes (Volumenmittelwert) zwischen 1,52 und 1,55, bevorzugt zwischen 1,53 und 1,54 geeignet. Die jeweilige Auswahl optimaler Partikelbrechungsindizes und Radienverhältnisse der Partikel wird bestimmt gemäß Makromol. Chem. 183 (1990) 221 für Partikel aus einem Kern und einer Schale bzw. gemäß M.Kerker, The Scattering of Light, Academic Press (1969) Kapitel 5.4 für Mehrschalenpartikel. Insbesondere Kern-Schale-Modifikatoren mit einer Mehrschichtstruktur, die aus einem Kern und mehreren Schalen bestehen, sind besonders geeignet, um transparente schlagzähe Polymer-Legierungen zu erhalten.

Die Polymer-Legierungen werden hergestellt bei Temperaturen oberhalb der Glastemperatur des COC zwischen 60 und 350°C, bevorzugt zwischen 100 und 150°C und besonders bevorzugt zwischen 110 und 130°C.

Die Polymer-Legierungen können hergestellt werden durch übliche Verfahren (D.D. Walsh, Comprehensive Polymer Science, Pergamon Press (1989), Kapitel 5.2; J.L. White and K. Min, Comprehensive Polymer Science, Pergamon Press, (1989), Seite 285ff). Insbesondere können die Komponenten in Form von Pulvern oder Granulaten durch gemeinsame Extrusion aus der Schmelze zu Granulaten oder Chips verarbeitet werden, die anschließend in geformte Gebilde überführt werden können, z.B. durch Pressen, Extrudieren oder Spritzgießen. Insbesondere eignet sich die erfindungsgemäße Polymer-Legierung zur Herstellung spritzgegossener, spritzgeblasener, extrusionsgeblasener oder extrudierter Formkörper. Außerdem können auch Folien und Fasern aus der Polymer-Legierung hergestellt werden.

Die Polymer-Legierungen können werden über sogenannte master batches hergestellt. Hierbei werden Kern-Schale-Partikel in Mengen von 20 bis 80 Gew.-%, bezogen auf die Gesamtmasse der Polymer-Legierung, mit einem oder mehreren COC gemischt (bevorzugt durch gemeinsame Extrusion) und anschließend auf die gewünschte Endkonzentration durch erneutes Mischen (bevorzugt durch gemeinsame Extrusion) mit einem oder mehreren COC gebracht. Diese Methode führt zu einer guten Dispergierung der Kern-Schale-Partikel und wird bevorzugt verwendet, wenn Polymer-Legierungen mit Gehalten von 3 bis 25 Gew.-% Kern-Schale-Partikel, bezogen auf die Gesamtmasse der Polymer-Legierung, hergestellt werden.

Die erfindungsgemäß erhältliche Polymer-Legierung weist Reißdehnungen von 4 bis 200%, bevorzugt 5 bis 100%, besonders bevorzugt 10 bis 30% und Kerbschlagzähigkeiten von 2,5 bis 100 KJ/m², bevorzugt von 4 bis 50 KJ/m², besonders bevorzugt von 10 bis 30 KJ/m² auf.

Die Polymer-Legierungen können Additive in üblichen Mengen enthalten wie z.B. Plastifiziermittel, UV-Stabilisatoren, optische Aufheller, Antioxidantien, Antistatika, Wärmestabilisatoren oder verstärkende Zusätze wie Glasfasern, Kohlefasern oder Hochmodulfasern wie Polyaramide oder flüssigkristalline Polyester oder ähnliche. Außerdem können sie Füllstoffe wie anorganische Materialien, Talkum, Titandioxid oder ähnliches enthalten.

Die erfindungsgemäß erhältliche Polymer-Legierung eignet sich für eine Vielzahl von Anwendungen wie Behälter, Flaschen, Getränkebecher, medizintechnische Anwendungen wie Blisterverpackungen oder Spritzgußteile für Anästhesie, Beatmung, Pädiatrie oder medizinische Versorgungseinrichtungen, Haushaltsgüter wie Besteck, Mikrowellengeschirr, Gefrierdosen, Schüsseln, Wannen, insbesondere Badewannen, Wäscheklammern, Klobrillen, Wasserhähne, Möbel, Koffer, insbesondere Schalenkoffer, Blumentöpfe, Deckel und Verschlüsse für Flaschen, Spielwaren wie Bauklötze oder Tretautos, Extrusionsfolien z.B. für Verpackungen, Kondensatoranwendungen, Abdeckplanen, Bautechnische Anwendungen wie Fensterprofile, Panelen, Falttüren, Jalousien, Fußbodenbeläge, Luftfahrttechnische Anwendungen wie Flugzeuginnenausstattung, Fasern für Textilien, Gehäuse von elektrischen Geräten wie Drucker, Bildschirme, Tastaturen, Rechner, Telefon, HIFI-Geräten, Lampengehäuse, Schlagbohrmaschinen, Bandschleifer, Schwingschleifer, Kreissäge, Anwendungen bei tiefen Temperaturen wie Kühlschrankeinsätze oder Gefrierschrankteile, Kabelummantelungen, Rohre, Sportausrüstungen wie Schutzhelme, Bootsrümpfe, Surfboards, Inneneinrichtungen von Automobilen wie Auskleidungen oder Armaturenbretter, Außeneinrichtungen von Automobilen wie Stoßfänger, Trübeplankung oder Radkappen, Halbzeug wie Dichtungen, Rohrverbinder oder Kabelbinder.

Die erfindungsgemäß erhältliche Polymer-Legierung weist eine hohe Biegefestigkeit und eine hohe Spannungsrißbeständigkeit sowie eine gute Schmelzestabilität auf. Sie zeigt eine gute Bindenahtfestigkeit und eine hohe Fließfähigkeit, was insbesondere für Spritzgußanwendungen von Vorteil ist. Die mechanischen Eigenschaften wie z.B. Wärmeformstabilität, Reißdehnung und Kerbschlagzähigkeit lassen sich in weiten Bereichen variieren, so daß vielfältige Anwendungsbereiche zugänglich sind. Die erfindungsgemäß erhältliche Polymer-Legierung kann hergestellt werden, ohne daß eine in aufwendigen Tests vorzunehmende Optimierung der Kern-Schale-Partikel für das COC notwendig ist. Außerdem ist die Verarbeitung und Herstellung der Polymer-Legierung technisch einfach durchzuführen.

### Beispiele

Die Cycloolefincopolymere und Kern-Schale-Partikel wurden zunächst getrocknet (90°C, 24h, verminderter Druck) und anschließend in verschiedenen Gewichtsverhältnissen in einem Extruder (Firma Haake, Rheocord System 90 / Rheomex TW 100, Karlsruhe, Deutschland) unter Schutzgas (Argon) gemeinsam extrudiert. Die in Form von Granulat erhaltenen Polymer-Legierungen wurden erneut wie oben angegeben getrocknet und anschließend unter Schutzgas (Argon) zu Zugstäben, Schlagstäben und Platten spritzgegossen. Es wurde eine Spritzgußmaschine KM 90-210 B der Firma Krauss - Maffei, München, Deutschland benutzt. Physikalische Eigenschaften der Cycloolefincopolymere und deren Polymer-Legierungen wurden wie folgt charakterisiert.

Glastemperaturen wurden unter Verwendung eines Differentialkalorimeters DSC 7 der Firma Perkin Elmer, Überlingen, Deutschland bestimmt. Die Heizrate betrug 20°C/min.

Zur Bestimmung mechanischer Eigenschaften wie Elastizitätsmoduln, Reißdehnungen und Zugfestigkeiten gemäß DIN 53455 (Zug - Dehnungs - Eigenschaften) wurde eine Zug-Dehungs-Maschine 4302 der Firma Instron, Offenbach, Deutschland eingesetzt.

Kerbschlagzähigkeiten wurden mittels eines instrumentierten Schlagpendels 5102 der Firma Zwick, Ulm, Deutschland gemäß DIN 53453 gemessen.

Schmelzviskositäten wurden bestimmt unter Verwendung eines Rheometers RDS der Firma Rheometrics, Piscataway, NJ, USA.

Viskositätszahlen der verwendeten COC wurden gemäß DIN 53728 bestimmt (Dekahydronaphtalin, 135°C).

3-Punkt-Biegeversuche wurden gemäß DIN 53452/53457 an spritzgegossenen Prüfkörpern durchgeführt.

Es wurden folgende, kommerziell erhältliche Kern-Schale-Partikel verwendet:
- Blendex 338: GE Plastics
- Kane Ace B 511: Kaneka
- Kane Ace B 56: Kaneka

### Polymerisationen

### Beispiel 1

Ein sauberer und trockener 75 dm³ Polymerisationsreaktor mit Rührer wurde mit Stickstoff und dann mit Ethylen gespült und mit 12 kg Norbornen und 15 dm³ Toluol gefüllt. Es wurden 300 ml Triisobutylaluminiumlösung (20 % w/w in Toluol) zugegeben. Der Ethylendruck wurde auf 18 bar Überdruck eingestellt. Die Reaktionstemperatur wurde auf 70°C eingestellt. 20 mg Isopropenyl(cyclopentadienyl)(1-indenyl)-zirkondichlorid wurden in 500 ml einer toluolischen Methylaluminiumoxanlösung (10 Gew.-% Methylaluminoxan mit Molmasse 1300 g/Mol nach kryoskopischer Bestimmung) gelöst und anschließend in den Reaktor dosiert. Der Ethylendruck wurde durch Nachdosieren bei 18 bar gehalten. Nach 90 Minuten Polymerisationszeit wurde der Reaktorinhalt in einen 150 dm³ Rührkessel abgelassen, in dem 500 g Celite und 200 ml Wasser in 50 dm³ einer hydrierten Dieselölfraktion (Exxsol, Siedebereich 100 bis 120°C von Exxon) vorgelegt wurden. Bei 60°C wurde 20 Minuten gerührt.
Auf dem Filtergewebe einer 120 dm³ Drucknutsche wurde ein Filterkuchen aus 500 g Celite suspendiert in 10 dm³ Exxsol aufgebaut. Die Polymerlösung wurde über die Drucknutsche filtriert. Über der Lösung wurde ein Stickstoffdruck von 2,8 bar aufgebaut.

Anschließend wurde über sieben Filterkerzen (Fluid Dynamics, Dynalloy XS 64,5 *µ*m 0,1 m²/Kerze) die in einem Stahlgehäuse montiert wurden, filtriert. Die Polymerlösung wurde mittels eines Dispergators (Ultraturrax) in 500 dm³ Aceton eingerührt und dabei gefällt. Die Suspension wurde über eine 680 dm³ Rührdrucknutsche bei geöffnetem Bodenventil im Kreis gefördert. Nach Schließen des Bodenventils wurde dreimal mit 200 dm³ Aceton gewaschen. Das Produkt wurde nach der letzten Wäsche im Stickstoffstrom bei 60°C vorgetrocknet und im Trockenschrank 24 Stunden bei 0,2 bar und 80°C getrocknet. Es wurden 5,37 kg Polymer erhalten. Die VZ betrug 51 ml/g und die Glastemperatur 105°C.

### Beispiel 2

Es wurde gemäß Beispiel 1 verfahren, jedoch

Die Eigenschaften der Produkte sind in Tabelle 1 aufgeführt.

**Tabelle 1**

| COC | Katalysator | Glastemperatur (°C) | Viskositätszahl ml/g | Monomere |
|---|---|---|---|---|
| COC 1 | K₁ | 135 | 61 | Nb, Et |
| COC 2 | K₁ | 134 | 54 | Nb, Et |
| K₁: Isopropylen (1-indenyl) cyclopentadienylzirkondichlorid | | | | |
| Nb: Norbornen | | | | |
| Et: Ethylen | | | | |

### Messungen

### Beispiel 3:

Die nachfolgenden Tabellen zeigen die Kerbschlagzähigkeiten von reinen COC und COC/Kern-Schale-Partikel-Legierungen:

**Tab. 3.1:**

| Kerbschlagzähigkeiten reiner COC (in kJ/m²) | |
|---|---|
| Kerbschlagzähigkeit | |
| COC 1 | 1.9 |
| | |

**Tab. 3.2:**

| Kerbschlagzähigkeiten COC/Kern-Schale-Partikel-Legierungen (in kJ/m²) | | | |
|---|---|---|---|
| COC | Kern-Schale-Partikel | Gew.-% Kern-Schale-Partikel | Kerbschlagzähigkeit |
| COC 1 | M 511 | 20 | 8,5 |
| COC 1 | B 56 | 20 | 8,7 |
| COC 2 | Blendex 338 | 20 | 6,0 |

### Beispiel 4:

**Tab. 4:**

| Biegeeigenschaften von COC/Kern-Schale-Partikel-Legierungen | | | | |
|---|---|---|---|---|
| COC | Kern-Schale-Partikel (20 Gew.-%) | E-Modul (MPa) | Biegefestigkeit (MPa) | Bruchspannung (MPa) |
| COC 1 | M 511 | 2,15 | 74 | ohne Bruch |

### Beispiel 5:

Die nachfolgenden Tabellen zeigen die Zug - Dehnungs - Eigenschaften von reinem COC und COC/Kern-Schaie-Partikei-Legierungen:

**Tab. 5.1:**

| Zug - Dehnungs - Eigenschaften reiner COC | | | |
|---|---|---|---|
| | Modul (GPa) | Reißdehnung (%) | Zugfestigkeit (MPa) |
| COC 1 | 3.16 | 2.7 | 64 |
| COC 2 | 3.16 | 2.7 | 60 |

**Tab. 5.2:**

| Zug - Dehnungs - Eigenschaften von COC/Kern-Schale-Partikel-Legierungen | | | | | |
|---|---|---|---|---|---|
| | Legierung / | Gew.% Kern-Schale-Partikel | Modul (GPa) | Reißdehnung (%) | Zugfestigkeit (MPa) |
| COC 1 | M 511 | 20 | 2,15 | 36,0 | 39,0 |
| COC 1 | B 56 | 20 | 2,10 | 22,0 | 36,0 |
| COC 2 | Blendex 338 | 20 | 2,16 | 23,0 | 36,5 |

### Beispiel 6

Es wurden im Gewichtsverhältnis 50 zu 50 folgende Polymere in einem Haake-Extrder vermengt: COC2/PMMA, COC5/PMMA, COC9/PMMA, COC2/Polystyrol, COC5/Polystyrol, COC9/Polystyrol, COC2/Polycarbonat, COC5/Polycarbonat, COC9/Polycarbonat.
In allen Fällen wurden mittels DSC-Messungen (Perkin Elmer DSC-7 Überkingen Deutschland) die unveränderten Glastemperaturen der beiden Komponenten gefunden.

## Patentansprüche

1. Verfahren zur Herstellung einer Polymer-Legierung enthaltend a) eines oder mehrere Cycloolefincopolymere und b) einen oder mehrere Typen von Kern-Schale-Partikeln, wobei das Cycloolefincopolymer enthält, 0,1 bis 99 Gew.-% an Struktureinheiten, bezogen auf die Gesamtmasse des Cycloolefincopolymeren, die sich ableiten von einem oder mehreren polycyclischen Olefinen der Formeln I, II, III, IV V oder VI, 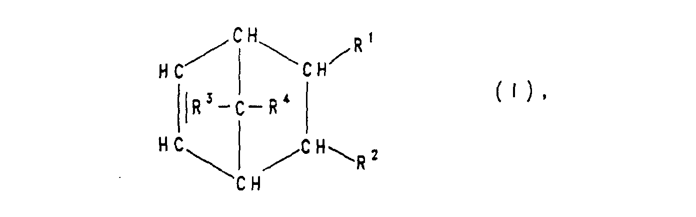 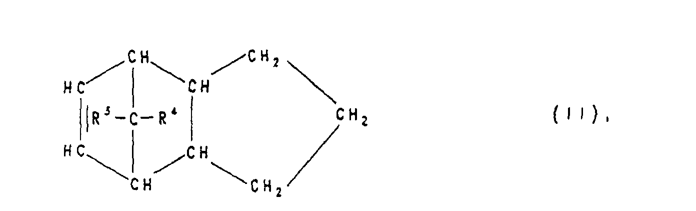 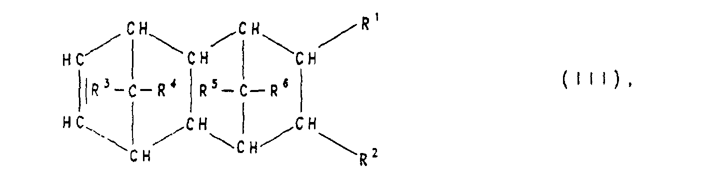 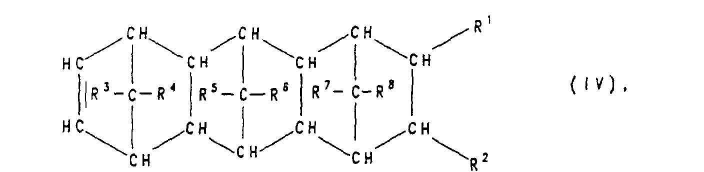 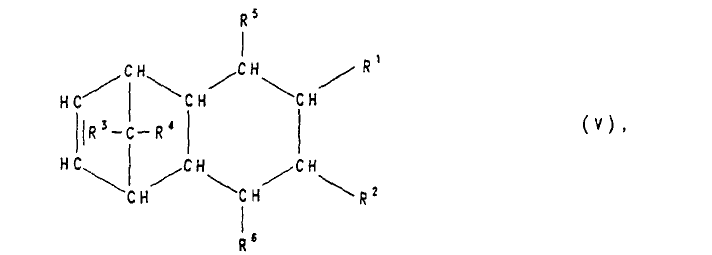 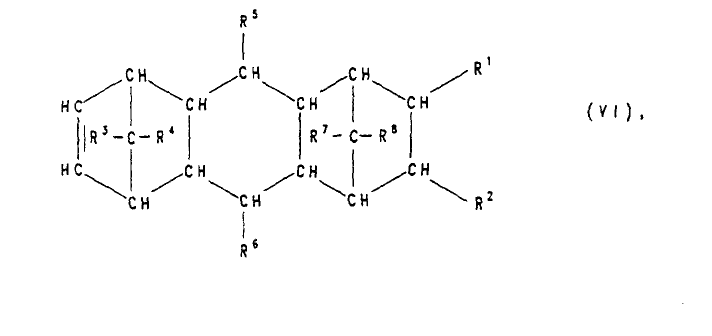 worin R¹, R², R³, R⁴, R⁵, R⁶, R⁷ und R⁸ gleich oder verschieden sind und ein Wasserstoffatom oder einen C₁-C₂₀-Kohlenwasserstoffrest bedeuten, oder zwei oder mehr der Reste R¹ bis R⁸ einen Ring bilden, und die Reste R¹ bis R⁸ in den verschiedenen Formeln I bis VI eine unterschiedliche Bedeutung haben können,
0 bis 95 Gew.-% an Struktureinheiten, bezogen auf die Gesamtmasse des Cycloolefincopolymeren, die sich ableiten von einem oder mehreren monocyclischen Olefinen der Formel VII 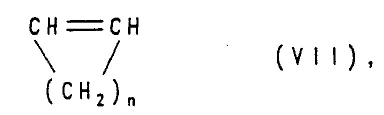 worin n eine Zahl von 2 bis 10 ist, und
0 bis 99 Gew.-% an Struktureinheiten, bezogen auf die Gesamtmasse des Cycloolefincopolymeren, die sich ableiten von einem oder mehreren acyclischen Olefinen der Formel VIII 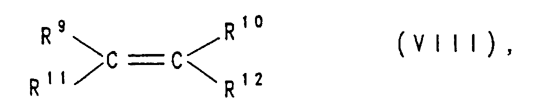 worin R⁹, R¹⁰, R¹¹ und R¹² gleich oder verschieden sind und ein Wasserstoffatom oder einen C₁-C₂₀-Kohlenwasserstoffrest bedeuten,
**dadurch gekennzeichnet, daß** a) eines oder mehrere Cycloolefincopolymere und b) ein oder mehrere Typen von Kern-Schale-Partikeln zu einem master batch gemischt werden und die resultierende Mischung mit einem oder mehreren Cycloolefincopolymeren gemischt wird.

2. Verfahren nach Anspruch 1, **dadurch gekennzeichnet, daß** man Kern-Schale-Partikeln verwendet, die zwischen 10 und 90 Volumen-% Kautschukphasen und zwischen 90 und 10 Volumen-% Hartphasen enthalten, bezogen auf das Gesamtvolumen der Partikeln.

3. Verfahren nach Anspruch 1 oder 2, **dadurch gekennzeichnet, daß** man die Polymer-Legierung zu Formkörpern, verarbeitet.

## Claims

1. A process for the preparation of a polymer alloy comprising a) one or more cycloolefin copolymers and b) one or more types of core/shell particles, the cycloolefin copolymer comprising 0.1 to 99% by weight of structural units, based on the total weight of the cycloolefin copolymer, which are derived from one or more polycyclic olefins of the formulae I, II, III, IV, V or VI, 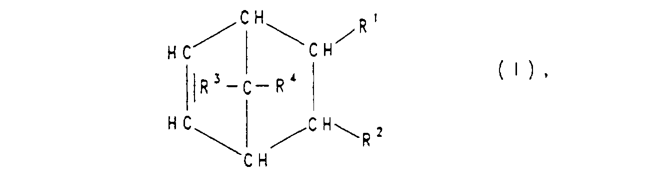 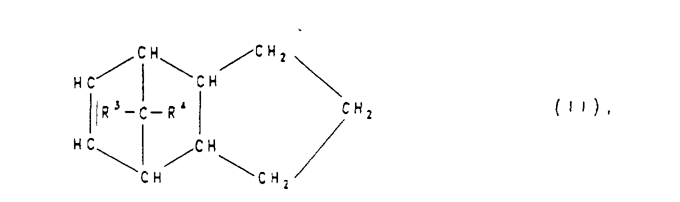 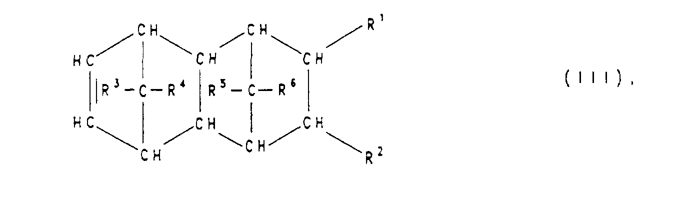 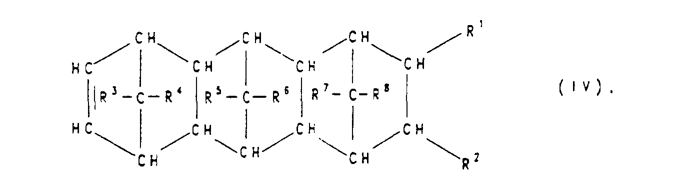 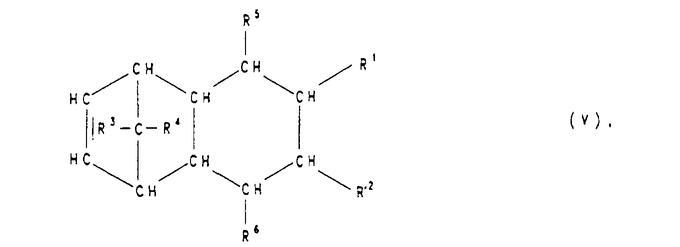 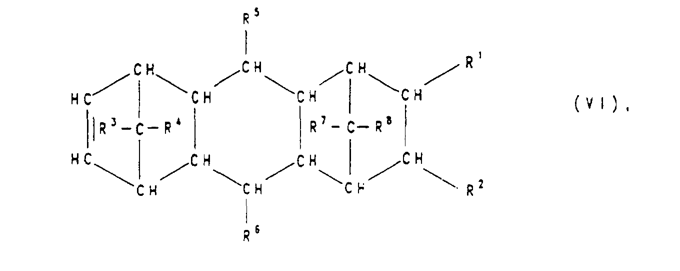 in which R¹, R², R³, R⁴, R⁵, R⁶, R⁷ and R⁸ are identical or different and are a hydrogen atom or a C₁-C₂₀ hydrocarbon radical or two or more of the radicals R¹ to R⁸ form a ring, and the radicals R¹ to R⁸ in the various formulae I to VI can have a different meaning,
0 to 95% by weight of structural units, based on the total weight of the cycloolefin copolymer, which are derived from one or more monocyclic olefins of the formula VII 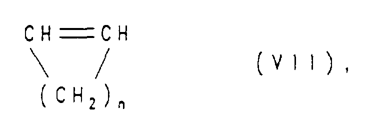 in which n is a number from 2 to 10, and
0 to 99% by weight of structural units, based on the total weight of the cycloolefin copolymer, which are derived from one or more acyclic olefins of the formula VIII 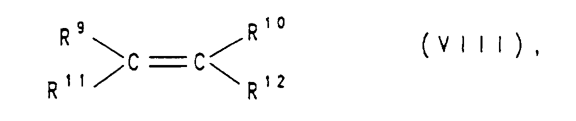 in which R⁹, R¹⁰, R¹¹ and R¹² are identical or different and are a hydrogen atom or a C₁-C₂₀ hydrocarbon radical wherein a) one or more cycloolefin copolymers and b) one or more types of core/shell particles are mixed to form a master batch and the resulting mixture is mixed with one or more cycloolefin copolymers.

2. The process as claimed in claim 1, wherein core/shell particles are used which comprise between 10 and 90% by volume of rubber phases and between 90 and 10% by volume of hard phases, based on the total volume of the particles.

3. The process as claimed in claim 1 or 2, wherein the polymer alloy is processed to form shaped articles.

## Revendications

1. Procédé pour la préparation d'un alliage de polymères contenant a) un ou plusieurs copolymères de cyclo-oléfines et b) un ou plusieurs types de particules constituées de noyau et d'enveloppe, le copolymère de cyclo-oléfine contenant 0,1 à 99 % en poids, par rapport à là masse totale du copolymère de cyclo-oléfines, de motifs structuraux qui dérivent d'une ou plusieurs oléfines polycycliques de formules I, II, III, IV, V ou VI 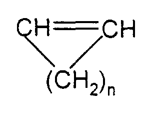 dans lesquelles R¹, R², R³, R⁴, R⁵, R⁶, R⁷ et R⁸ sont identiques ou différents et représentent un atome d'hydrogène ou un radical hydrocarboné en C₁-C₂₀, ou deux ou plus de deux des radicaux R¹ à R⁸ forment un cycle, et les radicaux R¹ à R⁸ dans les diverses formules I à VI peuvent avoir une signification différente,
0 à 95 % en poids, par rapport à la masse totale du copolymère de cyclo-oléfines, de motifs structuraux qui dérivent d'une ou plusieurs oléfines monocycliques de formule VII 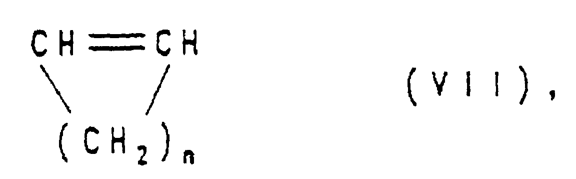 dans laquelle n est un nombre de 2 à 10, et
0 à 99 % en poids, par rapport à la masse totale du copolymère de cyclo-oléfines, de motifs structuraux qui dérivent d'une ou plusieurs oléfines acycliques de formule VIII 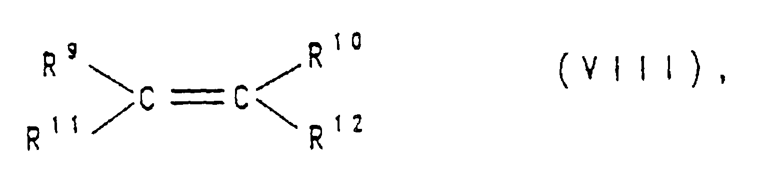 dans laquelle R⁹, R¹⁰, R¹¹ et R¹² sont identiques ou différents et représentent un atome d'hydrogène ou un radical hydrocarboné en C₁-C₂₀,
**caractérisé en ce qu'**on mélange a) un ou plusieurs copolymères de cyclo-oléfines et b) un ou plusieurs types de particules constituées de noyau et d'enveloppe, pour l'obtention d'un mélange-maître, et on mélange le mélange résultant avec un ou plusieurs copolymères de cyclo-oléfines.

2. Procédé selon la revendication 1, **caractérisé en ce qu'**on utilise des particules constituées de noyau et d'enveloppe qui contiennent entre 10 et 90 % en volume de phases de caoutchouc et entre 90 et 10 % en volume de phases dures, par rapport au volume total des particules.

3. Procédé selon la revendication 1 ou 2, **caractérisé en ce que** l'alliage de polymères est transformé en corps moulés.
